# EUROPÄISCHE PATENTANMELDUNG

(11) **EP 2 192 024 A2**
(43) Veröffentlichungstag der Anmeldung: **02.06.2010**
(21) Anmeldenummer: 09177233.5
(22) Anmeldetag: 26.11.2009
(51) Int. Cl.: B62D 13/00

(54) **Gliederzug und Lenksystem dafür**

(30) Priorität: 26.11.2008 DE 102008060801
(71) Anmelder: Gessner, Thomas, 01665 Klipphausen (DE)
(72) Erfinder: Gessner, Thomas, 01665 Klipphausen (DE)
(74) Vertreter: Kailuweit, Frank

(57) **Zusammenfassung**

Gleisloser Gliederzug bestehend aus mehreren Gliedern, die untereinander eine gelenkige Verbindung haben und jeweils eine lenkbare Achseinheit aufweisen, deren Achsmittclpunkt vertikal fluchtend unter der gelenkigen Verbindung liegt, wobei die Lenkungen der Achseinheiten derart miteinander gekoppelt sind, dass jede Achseinheit immer den gleichen Lenkwinkel in entgegengesetzter Richtung wie die jeweilig vordere Achseinheit einschlägt, wobei beide Lenkwinkel auf die Längsachse des Gliedes zwischen beiden Achseinheiten bezogen sind und der Lenkwinkel der vordersten Achseinheit durch die Fahrtrichtung bestimmt ist. Weiterhin werden geeignete Anhänger als Glieder des genannten gleislosen Gliederzuges beschrieben.

## Beschreibung

Die Erfindung bezieht sich auf ein Lenksystem für einen gleislosen Gliederzug, einen mit diesem Lenksystem ausgestatteten Gliederzug und einen Anhänger als Glied dieses Gliederzuges. Gliederzüge kommen insbesondere als Flurförderfahrzeuge zum Einsatz.

Gleislose Gliederzüge nach dem Stand der Technik bestehen im Allgemeinen aus mehreren aneinander gekoppelten, zweiachsigen Anhängern. Zur Verbesserung der Manövrierfähigkeit sind dabei oft beide Achsen lenkbar ausgeführt.

Derartige Gliederzüge haben bei engen Kurven das Problem, dass das Ende des Gliederzuges die Kurve mit einem wesentlich geringeren Radius durchfährt als der Anfang des Gliederzuges. Insbesondere beim innerbetrieblichen Verkehr in Werkhallen ist dies oft problematisch, da die Verkehrswege hier sehr eng bemessen sind. Zudem weisen derartige Gliederzüge eine schlechte Ladekapazität bezogen auf ihre Länge auf, resultierend aus dem nicht nutzbaren Raum im Deichselbereich.

Die Aufgabenstellung der vorliegenden Erfindung besteht darin, einen Gliederzug mit einem Lenksystem vorzuschlagen, bei dem alle Achseinheiten annähernd der Spur der vordersten Achseinheit folgen. Zudem soll der Gliederzug eine große Ladekapazität bei vergleichsweise geringer Länge aufweisen.

Im Verlauf dieser Schrift wird unter dem Begriff Achseinheit eine Einzel- oder Tandemachse verstanden.

Erfindungsgemäß wird die Aufgabe durch die Merkmale der unabhängigen Ansprüche 1, 4 und 7 gelöst. Vorteilhafte Ausgestaltungen der Erfindung sind Gegenstand von Unteransprüchen.

Der erfindungsgemäße Gliederzug besteht aus mehreren Gliedern, die untereinander eine gelenkige Verbindung haben und eine lenkbare Achseinheit in z-Richtung fluchtend zu jeder gelenkigen Verbindung aufweisen. Unter einer lenkbaren Achseinheit wird erfindungsgemäß genau eine lenkbare Achseinheit verstanden.

Dabei sind die Lenkungen der Achseinheiten derart miteinander gekoppelt, dass jede Achseinheit immer den gleichen Lenkwinkel in entgegengesetzter Richtung wie die jeweilig vordere Achseinheit einschlägt, wobei beide Winkel bezogen auf die Längsachse des Gliedes zwischen den beiden Achseinheiten bezogen ist. Der Lenkwinkel der vordersten Achseinheit wird durch die Fahrtrichtung bestimmt und bestimmt damit auch den eingeschlagenen Lenkwinkel aller weiteren Achseinheiten.

Bevorzugt ist die Achseinheit eine Vorder- oder Hinterachseinheit.

Mit der Formulierung bezogen auf die Längsachse des Gliedes zwischen den beiden Achseinheiten ist gemeint, dass für jedes Glied der Winkel zwischen dem Lenkeinschlag (bei Drehschemellenkung der Winkel der Achse) der vorderen Achseinheit und der Längsachse des Gliedes ermittelt wird und dieser Winkel entgegengesetzt (90°- dem Winkel) von der hinteren Achseinheit eingeschlagen wird (ebenfalls bezogen auf die Längsachse des Gliedes). Für das darauf folgende Glied wird wiederum der Winkel zwischen dem Lenkeinschlag der vorderen Achseinheit und der Längseinheit dieses Gliedes ermittelt und weitergegeben. Somit wird für die Ermittelung des Lenkwinkels einer Achseinheit der Lenkwinkel der Achseinheit davor in entgegengesetzter Richtung mit dem Winkel zwischen den Längsachsen der beiden Glieder davor addiert.

Durch die oben beschriebene Koppelung der Lenkeinheiten wird erreicht, dass alle Achseinheiten annähernd der Spur der vordersten Achse folgen. Somit wird beispielsweise ermöglicht mit einem mehrgliedrigen Zug enge innerbetriebliche Wege abzufahren, wobei in den Kurvenbereichen keine Wegverbreiterung erforderlich ist.

In einer bevorzugten Ausgestaltung sind die Glieder des Gliederzuges Anhänger mit jeweils einer Hinterachseinheit, die vorderseitig auf der Hinterachseinheit des jeweils vorderen Anhängers aufliegen. Der vorderste Anhänger weist in diesem Fall zusätzlich eine Vorderachse auf oder liegt vorderseitig auf einem Zugfahrzeug auf. Somit wird ermöglicht die einzelnen Glieder des Zuges einfach an- und abzukoppeln und die Länge ohne großen Aufwand zu ändern.

Alternativ sind die Glieder des Gliederzuges Anhänger mit jeweils einer Vorderachseinheit, die rückseitig auf der Vorderachseinheit des jeweils vorderen Anhängers aufliegen, wobei der letzte Anhänger zusätzlich eine Hinterachseinheit aufweist. Dabei ist Lenkung der Hinterachseinheit des letzten Anhängers derart an die Lenkung der Vorderachseinheit des hintersten Anhängers gekoppelt, dass die Hinterachseinheit den Lenkwinkel der Vorderachseinheit in entgegengesetzter Richtung einschlägt.

Bei dem erfindungsgemäßen Lenksystem für einen oben beschriebenen Gliederzug schlägt jede Achseinheit bezogen auf die jeweilige Fahrzeugachse immer den gleichen Lenkwinkel in entgegengesetzer Richtung wie die jeweilig vordere Achseinheit ein, wobei der Lenkwinkel der vordersten Achseinheit durch die Fahrtrichtung bestimmt ist.

In einer bevorzugten Ausführung erfolgt die Koppelung der Lenkungen der Achseinheiten hydraulisch, elektrisch oder mechanisch. Im einfachsten Fall erfolgt die Koppelung kostengünstig mittels Gestänge oder Seilzug. Hierbei ist darauf zu achten, dass das Gestänge bzw. die Seile in gleicher Höhe (z-Richtung) wie die gelenkige Verbindung der einzelnen Glieder geführt werden, da es sonst beim Durchfahren von kurzen Senken oder beim Überfahren kurzer Hügel durch die horizontale Knickung an den Gelenken des Gliederzuges zu einer Zugbelastung in den Seilen bzw. im Gestänge kommen könnte. Gegebenenfalls können alternativ entsprechende Maßnahmen zum Wegausgleich vorgesehen werden. Zudem ist beim Einsatz einer Drehschemellenkung darauf zu achten, dass der Drehpunkt des Drehschemels z-Richtung fluchtend unter der gelenkigen Verbindung der Glieder liegt. Beim Einsatz einer Achsschenkellenkung ist ebenso darauf zu achten, dass der Achsmittelpunkt z-Richtung fluchtend unter der gelenkigen Verbindung liegt. Bei Tandemachsen sollte sich die gelenkige Verbindung entsprechend in z-Richtung fluchtend über dem Mittelpunkt des von der Tandemachse gebildeten Rechteckes befinden.

Bevorzugt ist die Lenkung der Achseinheiten eine Drehschemellenkung oder eine Achsschenkellenkung. Die Ausführung als Drehschemellenkung ist besonders kostengünstig. Demgegenüber ist der Platzbedarf einer Achsschenkellenkung deutlich geringer, woraus eine große Ladekapazität des Zuges resultiert, und die Standfestigkeit bei Kurvenfahrt deutlich höher.

Der erfindungsgemäße Anhänger für einen oben beschriebenen Anhängerzug weist in einer bevorzugten Ausführung ein selbsttragendes, biegesteifes Portaltragwerk auf, das den Laderaum in Fahrzeuglängsrichtung überspannt. Dadurch ist die beidseitige freie Zugänglichkeit des Laderaumes ohne einen störenden, bodennahen Fahrzeuglängsrahmen gewährleistet. Weiterhin hat jeder Anhänger eine mittels eines Hubwerkes heb- und senkbare Aufnahme für die Rollbehälter. Rückseitig hat jeder Anhänger eine Hinterachse. Zudem weist jeder Anhänger vorderseitig eine Sattelplatte und rückseitig eine Sattelkupplung zum Aneinanderkoppeln mehrere Anhänger auf. Dadurch, dass zwei aufeinanderfolgende Anhänger eine gemeinsame Achse nutzen, kann die Baulänge der Anhänger vorteilhaft reduziert werden.

### Zwei alternative Ausgestaltungen für die Aufnahme der Rollbehälter sind vorgesehen:

Bei der ersten Ausgestaltung weist der Anhänger zusätzlich eine Bodenplatte auf. Durch das stabilisierende Portaltragwerk benötigt die Bodenplatte keinen, beim Beladen störenden Rahmen in Fahrzeuglängsrichtung und kann beidseitig barrierefrei mit Rollbehältern be- und entladen werden. Die Bodenplatte ist mittels eines Hubwerkes heb- und senkbar.

Vorteilhaft ist die Bodenplatte auswechselbar und an Rollbehälter unterschiedlicher Spurweite anpassbar.
In einer bevorzugten Ausgestaltung weisen die Bodenplatte und/ oder das Portaltragwerk Aufnahmen für Sperrstangen auf.

Vorteilhaft ist die Bodenplatte mit dem Portaltragwerk verbunden und das Hubwerk hebt beide gemeinsam an. Dadurch wird es möglich, die Sperrstangen so zwischen Bodenplatte und Portaltragwerk einzusetzen, dass sie Zugkräfte aufnehmen können. So werden die, bei schweren Rollbehältern auftretenden Biegekräfte in der Bodenplatte auf das Portaltragwerk übertragen und ein Durchbiegen der Bodenplatte nach dem Anheben wirksam verhindert.

In einer gleichfalls bevorzugten Ausgestaltung ist die Bodenplatte gesickt ausgeführt, wobei weiterhin vorteilhaft die Sicken als Radführungsprofile ausgebildet sein können, die die Positionierung der Rollbehälter beim Beladen erleichtern.

In einer weiteren bevorzugten Ausgestaltung weisen die Radführprofile Lochleisten zur Aufnahme der Sperrstangen auf.

Durch die Bodenplatte sind die Rollbehälter, insbesondere bei Fahrten im Freien, vorteilhaft gegen Schmutz und Wasser geschützt.

In der zweiten Ausgestaltung weist der Anhänger keine Bodenplatte auf. Die Aufnahme der Rollbehälter erfolgt am Tragrahmen im oberen Bereich des Portaltragwerkes. Die Rollbehälter weisen bei dieser Ausgestaltung ebenfalls oben Mittel zum Einhängen in den Tragrahmen auf. Dadurch entfällt das Positionieren der Rollbehälter auf der Bodenplatte beim Beladen. Vorteilhaft werden als Mittel zur Aufnahme der Rollbehälter offene Profilschienen eingesetzt.

Bei beiden Ausgestaltungen besteht die Möglichkeit, die geladenen Rollbehälter durch abnehmbare Planen gegen Schmutz und Niederschlag zu schützen.

Nachfolgend wird die Erfindung anhand zweier Figuren erläutert. Dabei zeigen:
**Figur 1** die Draufsicht eines erfindungsgemäßen Gliederzuges während der Fahrt und
**Figur 2** die Seitenansicht eines erfindungsgemäßen Anhängerzuges.

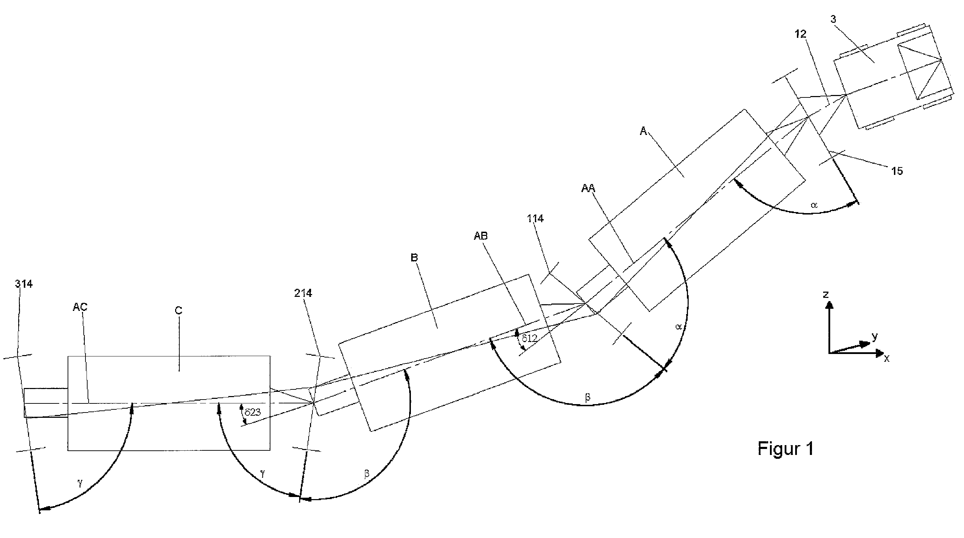

**Figur 1** zeigt die Draufsicht eines erfindungsgemäßen Anhängerzuges mit einem Zugfahrzeug 3 und einem ersten Anhänger A mit einer Längsachse AA, einem zweiten Anhänger B mit einer Längsachse AB und einem dritten Anhänger C mit einer Längsachse AC. Der Winkel zwischen der Längsachse AA des ersten Anhängers wird als δ12 und der Winkel zwischen der Längsachse AB des zweiten Anhängers B und der Längsachse AC des dritten Anhängers C wird als δ23 bezeichnet. Der erste Anhänger A liegt vorderseitig auf einem Adapterfahrgestell 15 mit Achsschenkellenkung auf, das mittels einer Zug- und Lenkdeichsel 12 mit dem Zugfahrzeug 3 verbunden ist. Rückseitig hat der erste Anhänger A eine Hinterachseinheit 114 mit hydraulisch angesteuerter Achsschenkellenkung. Auf der Hinterachseinheit 114 des ersten Anhängers A liegt die Vorderseite des zweiten Anhängers B auf. Dieser hat rückseitig ebenfalls eine Hinterachseinheit 214 mit Achsschenkellenkung auf der analog die Vorderseite des dritten Anhängers C aufliegt, welcher rückseitig eine Hinterachseinheit 314 mit Achsschenkellenkung aufweist. Die Achsschenkellenkungen sind in der Figur 1 zur Vereinfachung der Darstellung und Verbesserung der Übersichtlichkeit als Drehschemel dargestellt.

Im Fahrbetrieb wird durch die Zug- und Lenkdeichsel 12 an der Achsschenkellenkung des Adapterfahrgestells 15 ein Lenkwinkel α in Fahrtrichtung eingeschlagen. Der Lenkwinkel α wird dabei zwischen der Längsachse AA und der eingeschlagenen Fahrtrichtung der Lenkung des Adapterfahrgestells 15 gemessen. Dieser Lenkwinkel α des Adapterfahrgestells 15 wird hydraulisch an die Hinterachseinheit 114 übertragen welche den Winkel α synchron in entgegengesetzter Richtung (d.h. 90°- α) einschlägt. An der Vorderseite des Anhängers B wird der Lenkwinkel β, zwischen der eingeschlagenen Lenkposition der Hinterachseinheit 114 des ersten Anhängers A und der Längsachse AB des zweiten Anhängers B gemessen. Der Lenkwinkel β ist somit der Lenkwinkel der Hinterachseinheit 114 bezogen auf die Längsachse AB des zweiten Anhängers B. Der Lenkwinkel β beträgt somit β = 90°-α + δ12. Der Lenkwinkel β wird ebenfalls hydraulisch an die Hinterachseinheit 214 des zweiten Anhängers B übertragen und dort entgegengesetzt (90°- β) eingelenkt. An der Vorderseite des dritten Anhängers C wird wiederum der Winkel γ ermittelt, der sich durch γ = 90°- β + δ23 bestimmt. Der Winkel γ wird an die hydraulisch an die Hinterachseinheit 314 des dritten Anhängers C übertragen und dort entgegengesetzt (90°- γ) eingelenkt.

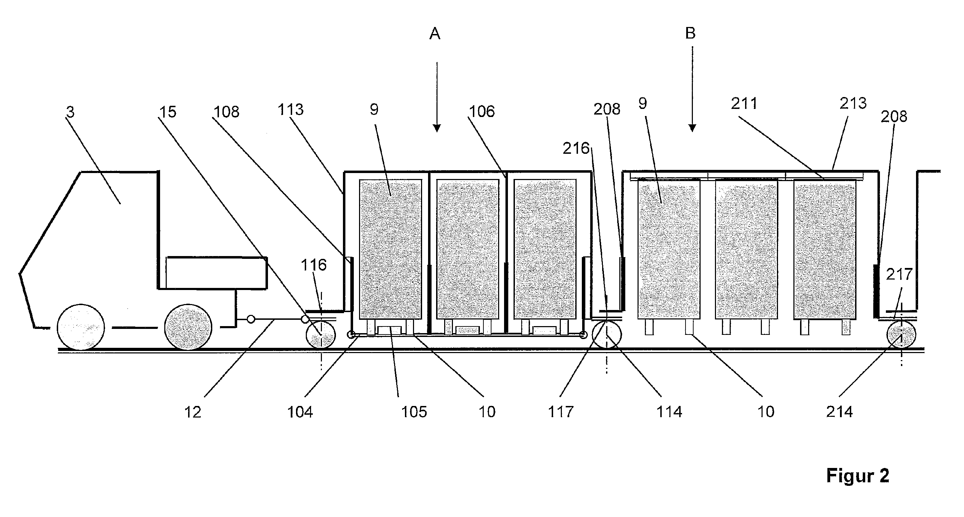

In **Figur 2** ist ein Zugfahrzeug 3 mit einem erfindungsgemäßen Anhängerzug dargestellt. Ein mit dem Zugfahrzeug 3 verbundener, erster Anhänger A weist eine Bodenplatte 104 auf, auf der die zu transportierenden Rollbehälter 9 platziert werden. Die Bodenplatte 104 ist eine gesickte Stahlplatte. Zur Erleichterung des Beladens weist die Bodenplatte 104 Radführungsprofile 105 auf. Weiterhin hat der erste Anhänger A ein Portaltragwerk 113, bestehend aus einem Stahlrahmen aus geschweißten Hohlprofilen. Das Portaltragwerk 113 ist im vorderen Bereich mit der Sattelplatte 116 verbunden. Die Sattelplatte 116 ist mit einem Adapterfahrgestell 15 verbunden, welches über eine Zug- und Lenkdeichsel 12 an das Zugfahrzeug 3 gekoppelt ist. Das Adapterfahrgestell 15 weist eine Achsschenkellenkung auf, die durch die Zug- und Lenkdeichsel 12 betätigt wird und den Winkel zwischen der Zuge- und Lenkdeichsel 12 und dem ersten Anhänger A einschlägt. Seitlich neben den geladenen Rollbehältern 9 sind an der Bodenplatte 104 und/oder dem Portaltragwerk 113, Sperrstangen 106 befestigt. In vorderen Bereich des ersten Anhängers A ist eine Sperrstange 106 dargestellt, die sowohl mit der Bodenplatte 104 als auch mit dem Portaltragwerk 113 verbunden ist, so dass Zugkräfte aufgenommen werden können. Somit erfüllen die Sperrstangen 106 im vorderen Bereich des ersten Anhängers A eine Doppelfunktion als Transportsicherung und zur Stabilisierung. Die hinteren beiden Sperrstangen 106 des ersten Anhängers A sind nur in der Bodenplatte 104 befestigt und dienen somit nur als Transportsicherung. Rückseitig weist der erste Anhänger 1 ein Lenkfahrgestell 114 ebenfalls mit Achsschenkellenkung auf, auf dem sich eine Sattelkupplung 117 für einen weiteren Anhänger befindet.

An den ersten Anhänger A ist auf der Sattelkupplung 117 ein zweiter Anhänger B über dessen Sattelplatte 116 angekoppelt. Am Portaltragwerk 213 des zweiten Anhängers B ist oben ein Tragrahmen 211 zur Aufnahme der Rollbehälter 9 angeordnet. Die Rollbehälter 9 zum Transport mit dem zweiten Anhänger B haben hier nicht gezeigte Mittel zur Befestigung am Tragrahmen 211. Rückseitig hat der zweite Anhänger B eine Hinterachseinheit 214 mit einer Achsschenkellenkung 214.

### Bezugszeichenliste

- A: erster Anhänger
- AA: Längsachse erster Anhänger
- B: zweiter Anhänger
- AB: Längsachse zweiter Anhänger
- C: dritter Anhänger
- AC: Längsachse dritter Anhänger
- δ12: Winkel zwischen der Längsachse AA und der Längsachse AB
- δ23: Winkel zwischen der Längsachse AB und der Längsachse AC
- α: Lenkwinkel
- β: Lenkwinkel
- γ: Lenkwinkel
- 3: Zugfahrzeug
- 9: Rollbehälter
- 10: Trag- und Führungsrollen des Rollbehälters
- 12: Zug- und Lenkdeichsel
- 13: Portaltragwerk
- 15: Adapterfahrgestell
- 104: Bodenplatte
- 105: Radführungsprofile
- 106a: Sperrstange einseitig befestigt
- 106b: Sperrstange beidseitig befestigt
- 108: Hubwerk
- 113: Portaltragwerk
- 114: Hinterachseinheit
- 116: Sattelplatte
- 117: Sattelkupplung
- 118: Lochleiste
- 208: Hubwerk
- 211: Tragrahmen
- 213: Portaltragwerk
- 214: Hinterachseinheit
- 216: Sattelplatte
- 217: Sattelkupplung
- 314: Hinterachseinheit

## Patentansprüche

1. Gliederzug bestehend aus mehreren Gliedern die untereinander eine gelenkige Verbindung haben und eine lenkbare Achseinheit vertikal fluchtend zu jeder gelenkigen Verbindung aufweisen wobei die Lenkungen der Achseinheiten derart miteinander gekoppelt sind, dass jede Achseinheit immer den gleichen Lenkwinkel in entgegengesetzer Richtung wie die jeweilig vordere Achseinheit einschlägt, wobei beide Lenkwinkel auf die Längsachse des Gliedes zwischen beiden Achseinheiten bezogen sind und der Lenkwinkel der vordersten Achseinheit durch die Fahrtrichtung bestimmt ist.

2. Gliederzug nach Anspruch 1,
**dadurch gekennzeichnet, dass**
die Achseinheit eine Vorderachseinheit oder eine Hinterachseinheit ist.

3. Gliederzug nach Anspruch 1 oder 2,
**dadurch gekennzeichnet, dass**
die Achseinheit eine Einzel- oder Tandemachse ist.

4. Gliederzug nach einem der Ansprüche 1 bis 3,
**dadurch gekennzeichnet, dass**
die Glieder Anhänger mit jeweils einer Hinterachseinheit sind, die vorderseitig auf der Hinterachseinheit des jeweils vorderen Anhängers aufliegen.

5. Gliederzug nach einem der Ansprüche 1 bis 3,
**dadurch gekennzeichnet, dass**
die Glieder Anhänger mit jeweils einer Vorderachseinheit sind, die rückseitig auf der Vorderachseinheit des jeweils vorderen Anhängers aufliegen, wobei der letzte Anhänger zusätzlich eine Hinterachseinheit aufweist.

6. Lenksystem für einen Gliederzug nach einem vorangehenden Ansprüche,
**dadurch gekennzeichnet, dass**
dass jede Achseinheit immer den gleichen Lenkwinkel in entgegengesetzer Richtung wie die jeweilig vordere Achseinheit einschlägt, wobei beide Winkel auf die Längsachse des Gliedes zwischen beiden Achseinheiten bezogen sind und wobei der Lenkwinkel der vordersten Achseinheit durch die Fahrtrichtung bestimmt ist.

7. Lenksystem nach Anspruch 6,
**dadurch gekennzeichnet, dass**
die Koppelung der Lenkungen der Achseinheiten hydraulisch, mechanisch, elektrisch insbesondere mittels Gestänge oder Seilzug erfolgt.

8. Lenksystem nach Anspruch 6 oder 7,
**dadurch gekennzeichnet, dass**
die Lenkung der Achseinheiten eine Drehschemellenkung oder eine Achsschenkellenkung ist.

9. Anhänger (A, B) als Glied eines Gliederzuges nach Anspruch 4, insbesondere zur Aufnahme von Rollbehältern (9), mit einem sich in Fahrzeuglängsrichtung über den Laderaum des Anhängers (1,2) erstreckenden Portaltragwerk (113, 213), einer mittels eines Hubwerkes (108, 208) heb- und senkbaren Aufnahme für Rollbehälter (9), einer Hinterachseinheit (114, 214, 314), einer rückseitigen, mit dem Portaltragwerk (113, 213) verbundenen Sattelkupplung (117, 217) und einer vorderseitig mit dem Portaltragwerk (113, 213) verbundenen Sattelplatte (116, 216).

10. Anhänger als Glied eines Gliederzuges nach Anspruch 5, insbesondere zur Aufnahme von Rollbehältern (9), mit einem sich in Fahrzeuglängsrichtung über den Laderaum des Anhängers (1,2) erstreckenden Portaltragwerk (113, 213), einer mittels eines Hubwerkes (108, 208) heb- und senkbaren Aufnahme für Rollbehälter (9), einer Vorderachseinheit (114, 214, 314), einer vorderseitigen, mit dem Portaltragwerk (113, 213) verbundenen Sattelkupplung (117, 217) und einer rückseitig mit dem Portaltragwerk (113, 213) verbundenen Sattelplatte (116, 216).

11. Anhänger (A) nach Anspruch 9 oder 10,
**dadurch gekennzeichnet, dass**
die Aufnahme für Rollbehälter (9) eine Bodenplatte (104) ist.

12. Anhänger (A) nach Anspruch 11,
**dadurch gekennzeichnet, dass**
Bodenplatte (104) und Portaltragwerk (113) lösbar verbunden und gemeinsam durch das Hubwerk (108) heb- und senkbar sind.

13. Anhänger (A) nach Anspruch 11 oder 12,
**dadurch gekennzeichnet, dass**
die Bodenplatte (104) auswechselbar ist.

14. Anhänger (A) nach einem der Ansprüche 11 bis 13,
**dadurch gekennzeichnet, dass**
Bodenplatte (104) und/oder Portaltragwerk (113) Aufnahmen für Sperrstangen (106) aufweisen.

15. Anhänger (A) nach einem der Ansprüche 11 bis 13,
**dadurch gekennzeichnet, dass**
die Bodenplatte (104) Radführungsprofile (105) aufweist.

16. Anhänger (B) nach Anspruch 9 oder 10,
**dadurch gekennzeichnet, dass**
das Portaltragwerk (213) obenseitig einen Tragrahmen (211) zur Aufnahme von Rollbehälter (9) aufweist.
